Europäisches Patentamt

European Patent Office

Office européen des brevets

(11) Veröffentlichungsnummer: **0 186 835**
**A2**

(12) # EUROPÄISCHE PATENTANMELDUNG

(21) Anmeldenummer: 85115933.5

(51) Int. Cl.⁴: **G 11 B 27/11**, G 11 B 15/00

(22) Anmeldetag: 13.12.85

(30) Priorität: 17.12.84 AT 3998/84

(43) Veröffentlichungstag der Anmeldung: 09.07.86
Patentblatt 86/28

(84) Benannte Vertragsstaaten: **DE FR GB**

(71) Anmelder: **Benesch, Fred, Museumstrasse 9-11 I. Stock, A-6020 Innsbruck (AT)**

(72) Erfinder: **Benesch, Fred, Museumstrasse 11, A-6021 Innsbruck (AT)**
Erfinder: **Höck, Kurt, Dipl.-Ing., Stumpf Strasse 70, A-6020 Innsbruck (AT)**

(54) **Zusatzeinrichtung für Videorekorder zur Ermöglichung einer sekundengenauen Band-Ziel-Positionierung.**

(57) Zusatzeinrichtung für Videorekorder zur Ermöglichung einer gleichbleibend exakt sekundengenauen Band-Ziel-Positionierung zur Auswahl bestimmter Ton-Bild-Aufzeichnungen auch bei beliebiglanger Benützungsdauer des Gerätes durch Abnahme von bandwegproportionalen Signalen und Auswertung dieser durch einen Impulsprozessor.

Eine durch Fernbedienung übermittelte Zahlenfolge setzt den Impulsprozessor auf die der gewünschten Bandstelle entsprechende Zahl, welche die augenblickliche Position ermittelt und durch Schnellvor- bzw. Schnellrücklauf kurz vor der gewünschten Stelle auf Schnellsuchlauf mit angelegten Magnetköpfen schaltet und erst bei einem über die geräteeigene Videobuchse am Beginn der gewünschten Bandstelle empfangenen Schwarzcode auf Normalwiedergabe umschaltet, das Videosignal an den Monitor weitergibt und gleichzeitig den Prozessor auf die der jeweiligen Bandstelle entsprechende exakte Codezahl setzt, wodurch jeglicher durch unterschiedliche Bandaufwicklung entstehender Zählfehler auf Null korrigiert wird.

Ing. Fred Benesch
Museumstraße 11
A-6020  INNSBRUCK
ÖSTERREICH

04 86835

Bei Sonderausführungen handelsüblicher Videorekorder kann zur Zeit der programmierbare Ziellauf zur Auffindung einer bestimmten Bandstelle vom bespielten Videoprogramm nur mit einer Genauigkeit von plus-minus einer Minute möglich gemacht werden, sodaß dieser Ziellauf für Spezialaufgaben zu ungenau wäre.

Außerdem vergrößert sich die Differenz zur gesuchten Stelle immer mehr, je öfter eine derartige Stelle aufgesucht bzw. das Gerät abgestoppt und wieder in Funktion gesetzt wird, da das Magnetband bei jeder Schaltung als auch bei Neuwahl aus der Bandkassette herausgezogen wird und eben dadurch einen nicht geringen Schlupf verursacht.

Dem bisherigen Verwendungszweck dieser Sucheinrichtung entsprechend stört jedoch die bekannte Ungenauigkeit nicht.

Alle Videorekorder dienen fast ausschließlich dem Bedürfnis der Unterhaltung, wie Programm-Aufzeichnungen von TV-Sendungen, Abspielmöglichkeit von Kassetten divergierendster Programme, als auch als Abspielgerät für TV-Spiele.

Für alle diese Verwendungen genügte die bis zur Stunde bekannten durch die Bedienung zu tätigenden Schaltvorgänge.

Sehr viele Schaltvorgänge bzw. Bedienungshandgriffe sind von Gerät zu Gerät verschieden und bilden oftmals ein Problem zum ungestörten Funktionsablauf.

Eines jedoch haben alle diese Geräte gemeinsam:

Sie bestehen aus mehreren technischen Einzelgeräten mit Kabel- und Steckverbindungen und schließen daher nicht selten Störungsquellen mit ein.

Der Anwendungsbereich der Videorekorder war daher konstruktionsbedingt nur auf bestimmte Funktionen beschränkt.

Abgrenzung zum Stand der Technik:

Es ist bekannt (US-A-4 200 893 MATISON), eine elektronische Weganzeige, aber keine Band-Ziel-Positionierung, bei play-back-tauglichen Kassetten-Tonaufzeichnungsgeräten, wie z.B. Diktaphonen, durch einen Digitalzähler zu realisieren und außerdem zusätzlich anzuzeigen, wann eine auf der Kassette aufgenommene Toninformation, z.B. ein Code für das Ende eines Briefes, vom magnetischen Lesekopf des Diktiergerätes ausgelesen wird.

Es ist ferner bekannt (DE-B2-2638800 IBM), bei Computer-Bandstationen, bei denen ein Magnetband sich in ständigen Kontakt mit einem Drehmagnetkopf befindet und von diesem über Datenspuren Signale abgegeben werden, eine von diesen Signalen abhängige möglichst rasche Stillsetzung des Computerbandes zu bewirken, wobei eine Optimierung der Pendelbewegungen bei der Bandabbremsung vorgenommen wird.

Durch die bekannten Einrichtungen wird jedoch keine Band-Ziel-Positionierung bei Videokassettenbändern ermöglicht. Auch befindet sich bei den bekannten Einrichtungen immer ein magnetischer Lesekopf in Kontakt mit dem Magnetband.

Ziel der Erfindung ist es, einen Zusatz auf dem elektronischen Sektor zu entwickeln, der bei geringstmöglichem Umbau eines bestimmten handelsüblichen Videorekorders der Sonderklasse, dem Gerätebenützer eine sehr einfach zu bedienende Band-Ziel-Positionierung in sekundenschnelle das Auffinden ganz bestimmter Ton- und Bildsequenzen der Bandaufzeichnung ermöglicht.

Außerdem soll diese Geräteeinheit, bestehend aus dem Videorekorder mit integriertem Monitor, als eine frei von Steckverbindungen und störungsanfälligen Kabelsträngen konzipierte Kompakteinheit mit Fernbedienung zur Verfügung stehen.

Diese Erfindung geht demnach auch von einer kombinierten Geräteeinheit aus, bestehend aus dem Videobandgerät mit integriertem Monitor zur schnellen Auffindung bestimmter Ton- und Bildsequenzen von einem bespielten Magnetband, zur Verwendung in Film- und Fotoarchiven oder zur Verwendung im Angebotsbereich des Fremdenverkehrs, letzteres um dem auskunftssuchenden Gast die Möglichkeit zu geben, seine gewünschte Vorstellung aus der Fülle des Angebotes ohne Zeitverlust auszuwählen, ja sogar Vergleiche mit anderen ähnlichen auf dem Band aufgezeichneten Angeboten ziehen zu können.

Der Anwendungsbereich ist überall dort, wo gezielt Bild- und Toninformation als eine Tonbildeinheit verlangt ist.

Das Wesen der Erfindung ist eine Zusatzeinrichtung an einem handelsüblichen Videorekorder, zur wahlweisen Wiedergabe ganz bestimmter Ton- und Bildaufzeichnungen eines Magnetbandes aus einer Vielzahl verschiedener Ton- und Bildaufzeichnungen mit einer sekundengenauen Band-Ziel-Positionierung zu schaffen.

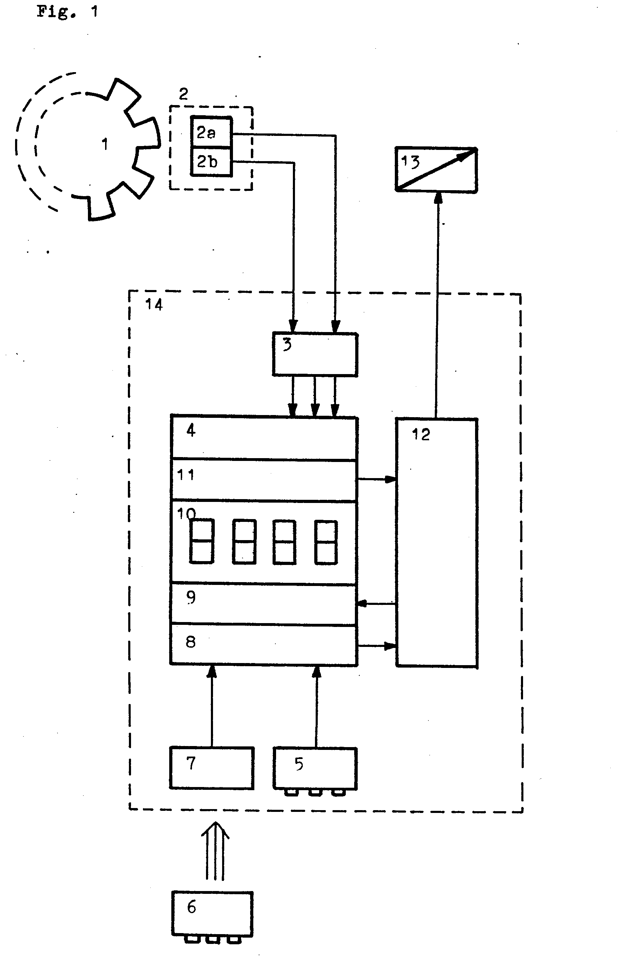

Gemäß Figur 1) wird zur Impulsgeberscheibe -1- ein zusätzlicher Impulsgeber -2- bestehend aus zwei optischen Reflexkopplern -2a- und -2b- montiert, welche ihrerseits mit der Impulslogik -3- innerhalb der Digitaleinheit -14- gekoppelt sind.

Durch Anbringung des zusätzlichen Impulsgebers -2- bestehend aus zwei um (n + 1/2) Zahnteilungen versetzten optoelektronischer Reflexkopplern -2a- und -2b- an der Wickelmotor-Impulsgeberscheibe des mit einer Zusatzfunktion zu versehenden Videorekorders werden bandwegproportionale Impulse erzeugt, aus diesen in einer Impulslogikschaltung -3- die Vorwärts- oder Rückwärtsbewegungen des Bandes erkannt und dementsprechende Impulse in einen Vor- oder Rückwärtszähler -4- addiert bzw. subtrahiert werden.

- 3 -

Eine durch ein Tastenfeld -5- direkt oder über eine Infrarotfernbedienung -6- bestehend aus einem IR-Fernbediensucher mit einem IR-Fernbedienempfänger -7- übermittelte Ziffereingabe setzt eine Eingabelogik -8- am Register -9- mit der gewünschten Bandstelle entsprechenden Zahl (Zielangabe) -10-.

Diese wird mit dem jeweiligen Zählerstand des Vor- Rückwärtszählers -4- verglichen und in einem Komparator -11- ausgewertet, welcher durch eine Ausgabelogikschaltung -12- eine Fernsteuerung der erforderlichen Rekorder-Betriebsfunktionen über die geräteeigene Fernbedienungsbuchse -13- bewirkt.

Da es jedoch bei der Messung der Bandposition von Videorekordern über eine Umdrehungszählung der Aufwickelspule zu Fehlern kommen kann die sich unter ungünstigen Umständen aufaddieren, ist es nach dieser Methode bei längerer Betriebszeit möglich, keine ausreichende Genauigkeit zu erreichen.

Ziel der Erfindung ist es, eine gleichbleibend exakt sekundengenaue Band-Zielpositionierung auch bei beliebiglanger Benützungsdauer des Gerätes zu bewirken.

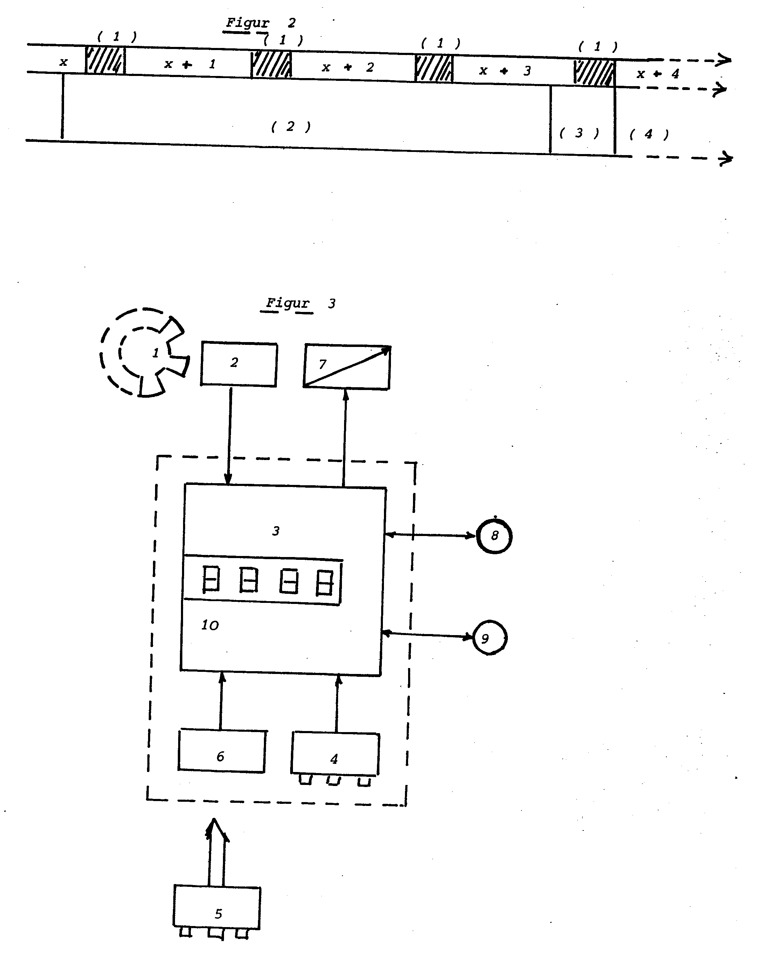

Gemäß Figur 2) wird der Bandlauf gegenständlicher Erfindung näher erläutert.

Beim vorliegenden Verfahren wird dieses Problem nun dadurch gelöst, daß der schnelle Vor- bzw. Rücklauf -2- ein Stück vor dem gewünschten Zielpunkt (x+4) gestoppt wird und anschließend im Videosuchlauf -3- bis zu einem Schwarzcode -1- (eine bestimmte Anzahl von Schwarzbildern) läuft.
Wenn diese Codierung -1- erkannt wird, wird der Videorekorder auf normale Wiedergabe -4- umgeschaltet und das Videosignal zum Monitor weitergegeben. Außerdem wird ein Positionszähler auf die eingegebene Zielposition gesetzt um ein Aufsummieren von Zählfehlern zu vermeiden.

Gemäß Figur 3) werden die Bandzählimpulse von der Impulsgeberscheibe -1- und dem Impulsaufnehmer -2- des Videorekorders abgenommen und einem Impulsprozessor -3- zugeführt. Eine durch ein Tastenfeld -4- direkt oder über eine Infrarot-Fernbedienung, bestehend aus einem Infrarot-Fernbediensender -5- und einem Infrarot-Fernbedienempfänger -6- übermittelte Zahlenfolge setzt den Impulsprozessor -3- auf die der gewünschten Bandstelle entsprechenden Zahl -10-(Zielangabe).

Der Prozessor -3- ermittelt aus der augenblicklichen Bandstelle die erforderliche Befehlsfolge und teilt diese über die Fernsteuerbuchse -7- dem Videorekorder mit. Der Schnellvor- bzw. Schnellrücklauf des Bandes wird kurz vor der gewünschten Stelle auf Schnellsuchlauf mit angelegten Magnetköpfen geschaltet und bei einem über die geräteeigene Videobuchse -8- empfangenen Schwarzcode am Beginn der gewünschten Bandstelle auf Normalwiedergabe geschaltet und das Videosignal an den Monitor -9- weitergegeben.

- 4 -

*Gleichzeitig wird der Prozessor -3- auf die der jeweiligen Bandstelle entsprechende exakte Codezahl gesetzt, wodurch jeglicher durch unterschiedliche Bandaufwicklung entstandener Zählfehler auf Null korrigiert wird.*

Patentanspruch:

Zusatzeinrichtung für Videorekorder zur Ermöglichung einer sekundengenauen Band-Ziel-Positionierung zur Auswahl bestimmter Ton- Bildaufzeichnungen gekennzeichnet durch die Kombination nachfolgender Merkmale:

1) Zusatzeinrichtung für Videorekorder zur Ermöglichung einer exakt sekundengenauen und schnellen Band-Ziel-Positionierung durch Abnahme der wegproportionalen Impulse (2) eines Wickelmotors (1) des Rekorders und Vergleich der von einem Prozessor (3) erkannten einer bestimmten Bandstelle entsprechenden Zahl mit einer ihm über eine Infrarot-Fernbedienung eingegebenen Zahl sowie anschließender Abgabe der für eine entsprechende Steuerung des Wiedergabegerätes erforderlichen Signale über die geräteeigene Fernbedienungsbuchse dadurch gekennzeichnet, daß ein vom Prozessor bewirkter Schnellvor- bzw. Schnellrücklauf des Bandes kurz vor der gewünschten Bandstelle auf Schnellsuchlauf mit angelegten Magnetköpfen umgeschaltet wird und erst nach Auswertung eines am Beginn der jeweils gewünschten Bandstelle abgegebenen Schwarzcodes im Videosignal auf Normalwiedergabe geschaltet und das Videosignal an einen Monitor weitergegeben wird.

2) Zusatzeinrichtung für Videorekorder nach Anspruch 1) dadurch gekennzeichnet, daß jedesmal gleichzeitig mit der Umschaltung des Rekorders auf Normalwiedergabe exakt an der gewünschten Bandstelle die im Prozessor (3) aufgelaufenen bandwegproportionale Codezahl gleich der eingegebenen Codezahl gesetzt wird und dadurch jeder wickelbedingt auftretende Zählfehler auf Null korrigiert wird.

Innsbruck, am 13.12.1985

Dipl.-Ing. Kurt Höck                    Ing. Fred Benesch

Ing. Fred Benesch

Museumstrasse 11

6021 Innsbruck

0186835

1/2

Fig. 1

Ing. Fred Benesch
Museumstrasse 11
6021 Innsbruck

0.186835

2/2

Figur 2

Figur 3